# EUROPEAN PATENT SPECIFICATION

(11) **EP 1 758 745 B1**
(45) Date of publication and mention of the grant of the patent: **11.06.2008**
(21) Application number: 05752070.2
(22) Date of filing: 10.06.2005
(51) Int. Cl.: B60G 11/12

(54) **ARRANGEMENT FOR SUSPENDING A LEAF SPRING ON A VEHICLE**
ANORDNUNG ZUR AUFHÄNGUNG EINER BLATTFEDER AN EINEM FAHRZEUG
DISPOSITIF POUR SUSPENSION D'UN RESSORT A LAMES SUR UN VEHICULE

(30) Priority: 16.06.2004 SE 0401583
(43) Date of publication of application: 07.03.2007
(73) Proprietor: VOLVO LASTVAGNAR AB, 405 08 Göteborg (SE)
(72) Inventor: PREIJERT, Stefan, S-41570 Göteborg (SE); SPRATLEY, Luis, 4460-299 Matosinhos (PT)
(74) Representative: Fröhling, Werner Otto
(86) International application number: PCT/SE2005/000889
(87) International publication number: WO 2005/123425

(56) References cited:
- EP-A2- 0 085 259
- GB-A- 427 104
- US-B1- 6 209 897

## Description

### FIELD OF THE INVENTION

The present invention relates to an arrangement for suspending a leaf spring on a vehicle according to the preamble to patent claim 1 and to a leaf spring suspension device according to the preamble to patent claim 18.

### BACKGROUND TO THE INVENTION AND THE PRIOR ART

Leaf spring devices for the spring-loaded suspension of vehicle wheel axles, preferably for wheels in trucks, are usually provided with a front and a rear mounting for suspension of a leaf spring assembly disposed between these mountings on a vehicle frame. The leaf spring assembly can be rotatably connected to the mountings. The rear mounting often comprises two pivot points and an intervening link which allows the leaf spring assembly to be displaced somewhat to the rear (and back again) along the longitudinal direction of the vehicle in the event of elastic deflection. The leaf spring assembly further has some form of means for coupling together the leaf spring and a vehicle wheel axle at a position situated between the front and rear mounting.

Examples of leaf spring devices according to the prior art are described in generic US-B-6 209 897 or JP 61075005.

In line with the ever greater safety requirements which are placed upon trucks, such as demands for longer deformation zones, the individual parts of the vehicles are required to be configured such that they behave as favorably as possible in the event of any collision. In a collision involving a truck, however, a leaf spring device according to the prior art which is disposed on a truck tends to break in an undesirable manner.

Usually, the front mounting of the leaf spring breaks and then the leaf spring assembly is bent away rearward in relation to the vehicle.

Such a spring assembly, which is connected to the vehicle frame by the rear mounting, does though have a relatively high bending resistance, so that the force which is needed during a collision to bend away and/or deform the spring assembly, which, during the collision, can also end up resting against other components of the vehicle, makes a not insubstantial contribution to the overall deformation characteristics of the vehicle.

### OBJECT OF THE INVENTION AND SUMMARY OF THE INVENTION

One object of the invention is to provide an arrangement of the type described in the introduction, which arrangement is more favorable with respect to its deformation characteristics should the arrangement be subjected to load during a collision.

The object is achieved with an arrangement as claimed in patent claim 1.

The fact that the suspension means of the arrangement is provided with a built-in weakening 16 so as, in the event of a prespecified loading of the suspension means 3, and when the leaf spring 1 is connected to a vehicle 7 by means of the suspension means 3, to allow the suspension means 3 to collapse while the rear end 5 of the leaf spring 1 is moved rearward substantially past its, in normal running, rearmost position and/or is set free from the vehicle, means that the resistance from the leaf spring during a collision will be substantially reduced, which, in turn, can help to create a longer collision zone, for example in the front part of a truck.

The invention also relates to a leaf spring device as claimed in patent claim 18.

Other advantageous distinguishing features and functions of various embodiments of the invention emerge from the following description and dependent patent claims.

### BRIEF DESCRIPTION OF THE DRAWINGS

There follows below, with reference to the appended drawings, a detailed description of embodiments of the invention which are cited by way of example.

In the drawings:
- figure 1: is a side view of a truck provided with an inventive arrangement for suspending a leaf spring,
- figure 1a: is an enlarged view of the inventive arrangement in figure 1,
- figure 2: is a part-view of a leaf spring suspension, showing a rear mounting according to the prior art for suspending a leaf spring on a vehicle frame,
- figure 3a: is a part-view of figure 1a, showing a rear mounting according to the invention for suspending a leaf spring on a vehicle frame,
- figure 3b: is a view corresponding to figure 3a, in which certain parts of the rear mounting have been omitted in order to provide clearer illustration of forces acting upon the mounting, and
- figure 3c: shows a partially cut exploded diagram of the rear mounting in figure 3a.

### DETAILED DESCRIPTION OF PREFERRED EMBODIMENTS OF THE INVENTION

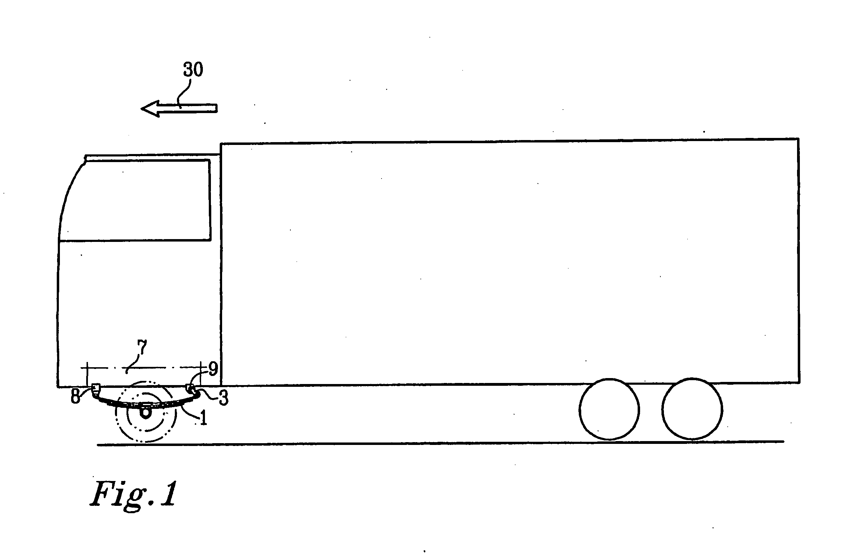

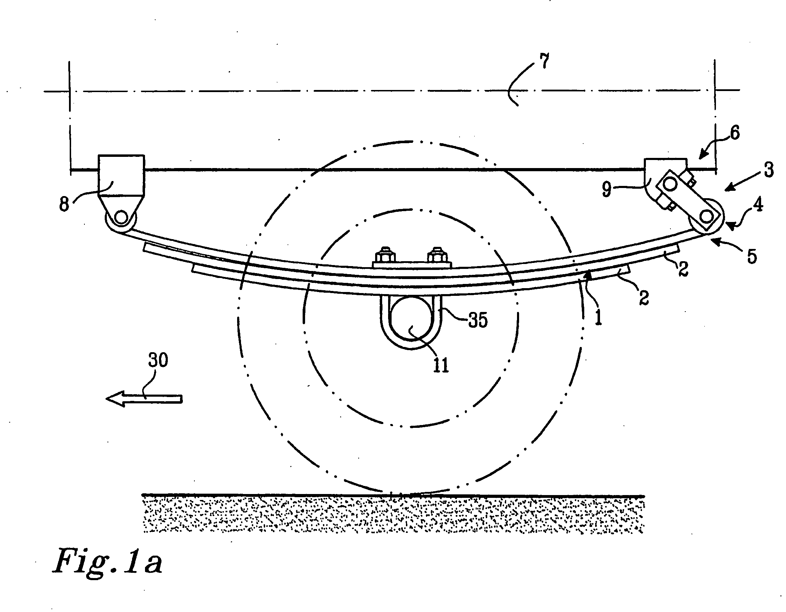

A truck provided with an inventive arrangement is illustrated in figure 1. A leaf spring suspension device is disposed on the front wheel axle of the vehicle. In figure 1a, the inventive arrangement for suspending a leaf spring 1 on a vehicle is illustrated in an enlarged view. By the term leaf spring 1 is meant one or more leaves 2 made of a resilient material, such as steel, which have been coupled together to form a resilient unit. The arrangement comprises a means 3, which, at a first end 4, is connectable to a rear end 5 of a leaf spring 1 and, at a second end 6, is connectable to a vehicle, for example to a vehicle frame 7, for suspension of the leaf spring 1 on the vehicle. By rear end 5 of a leaf spring 1 is meant the end which is disposed farthest back with respect to the normal direction of travel 30 of the vehicle. At the rear end 5 there is usually disposed one of normally two mountings 8, 9, disposed along the longitudinal direction of the vehicle, for the rotatable suspension of the leaf spring 1 on the vehicle. The inventive arrangement constitutes the rear mounting 9. The leaf spring 1 further has some form of means 35 for coupling together the leaf spring 1 and a vehicle wheel axle 11 at a position situated between the front 8 and the rear mounting 9.

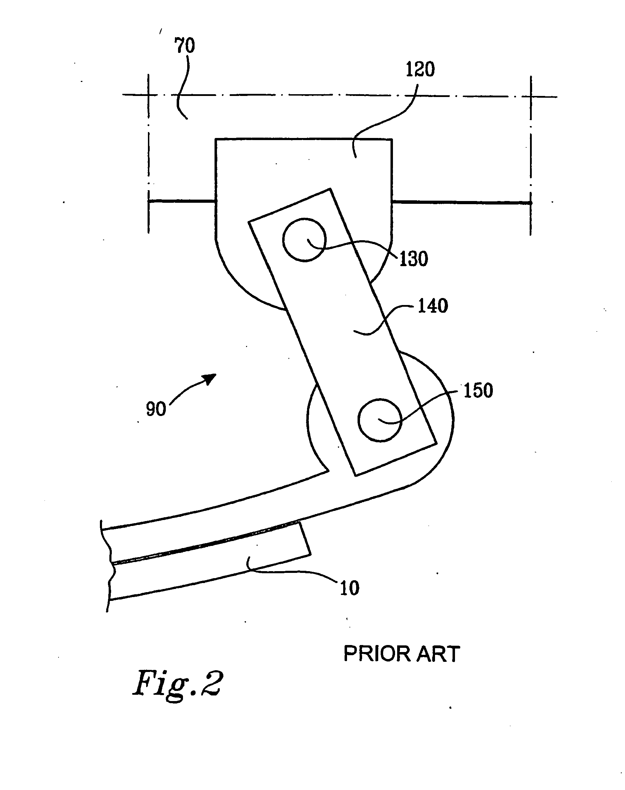

A rear mounting 90 configured according to the prior art is illustrated in figure 2. The mounting 90 has a first component 120, which is fastened to a vehicle' frame 70 and which is provided with an axle journal 130 for rotatable suspension of the leaf spring 10. The first component 120 and the leaf spring 10 are connected by a link arm 140, which is disposed between the first axle journal 130 and a second axle journal 150 of the leaf spring 10.

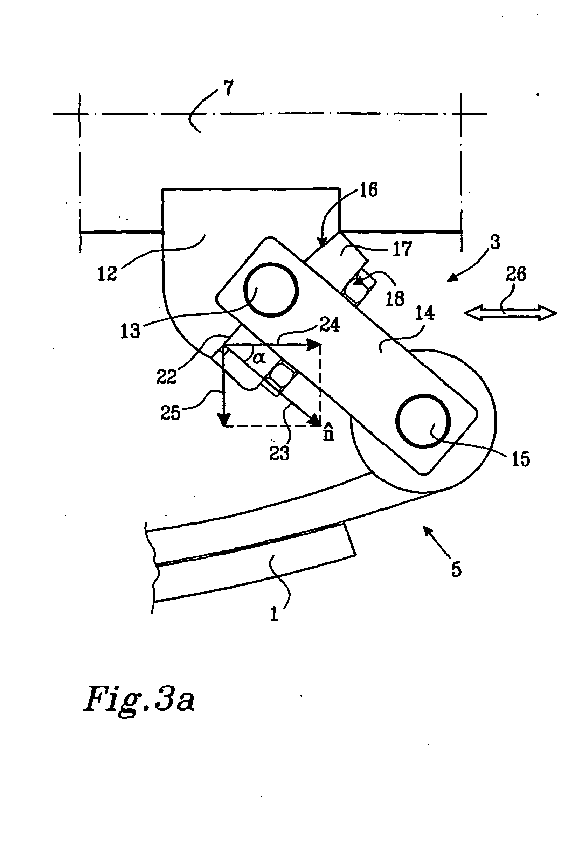

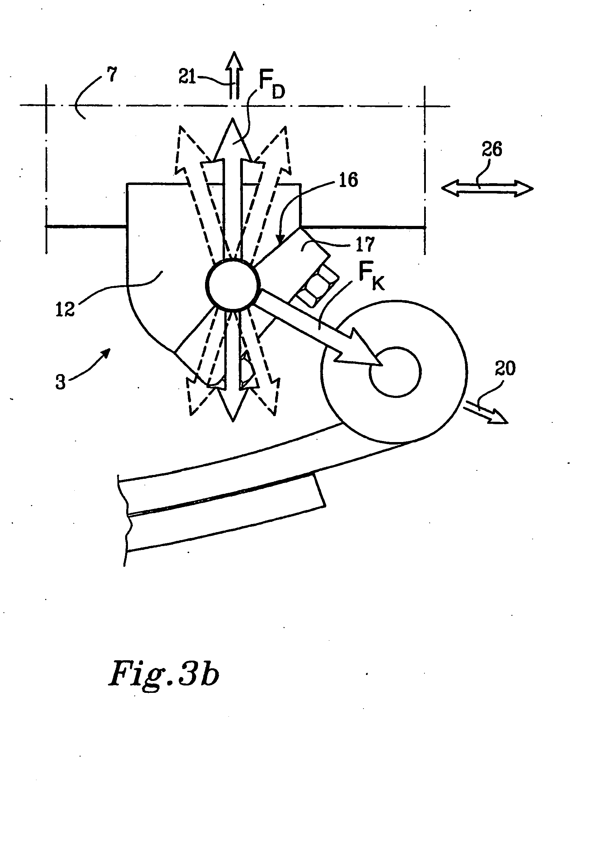

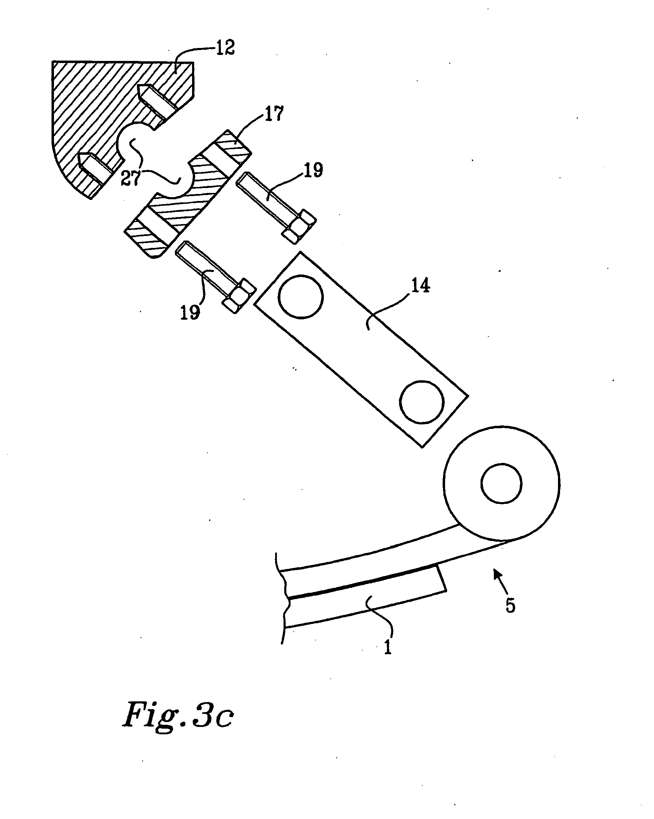

In figure 3a, 3b and 3c, an inventive arrangement is shown, in which the suspension means 3 is provided with a built-in weakening 16 so as, in the event of a prespecified loading of the suspension means 3, to allow the suspension means 3 to collapse. The suspension means 3 is provided with the built-in weakening 16 so as, in the event of said prespecified loading of the suspension means 3, and when the leaf spring 1 is connected to a vehicle, such as to a vehicle frame 7, by means of the suspension means 3, to allow the suspension means 3 to collapse while the rear end 5 of the leaf spring 1 is moved rearward substantially past its, in normal running, rearmost position and/or is set free from the vehicle 7.

This means that the inventive suspension means 3, unlike the mounting 90 according to the prior art (illustrated in figure 2), is designed to collapse in a predictable manner should a prespecified force act upon the suspension means 3 in a prespecified direction. Such a suspension means 3 can contribute to a desired force transmission and a desired deformation zone in a vehicle on which the particular leaf spring 1 is disposed.

According to the invention, the rear end 5 of the leaf spring 1 can therefore be moved to a position situated beyond the rearmost position which might be reached through the arrangement of a link arm 14 or corresponding component, and preferably the rear end 5 can be set free from the vehicle, so that the leaf spring 1, if the front mounting 8 breaks, can be moved rearward, while the rear mounting 9, and therefore the leaf spring 1 as a whole, makes no or only a minor contribution to the deformation strength of the vehicle in a collision. By rearward movement is here meant, therefore, movement in a substantially opposite direction to the normal direction of travel 30 for a vehicle.

In order to achieve the collapsing function of the suspension means 3, the suspension means 3 preferably comprises a first component 12, which is connectable to the vehicle 7, and a second component 17, which is connectable to a rear end 5 of a leaf spring 1, and further comprises a member 18, which is arranged to connect the first 12 and second 17 component. The connecting member 18 is here arranged to collapse in the event of said prespecified load, so that the first 12 and second component 17 are separable from one another. Although the connecting member 18 is preferably a screw joint containing one or more screws 19, other connections might also be possible. For example, riveting, welding or some other joining method might be used to join the two components 12, 17 in the desired way. It would also be possible to produce the two components 12, 17 in one and the same piece if a part of the piece constituting the connecting member is formed with a substantially lower strength than the remainder of the first and second component and/or if a notch is provided so that, in the event of said prespecified load, the connecting member breaks in a predictable manner so that the two components are separated.

As in the illustrated embodiment, the arrangement can further comprise a first axle journal 13, which is preferably disposed between the first component 12 and the second component 17, a second axle journal 15 of the leaf spring 1, and a link arm 14 arranged to connect the second component 17 to the leaf spring 1 by the first and the second axle journal. The suspension means 3 can comprise such a link arm 14 for rotatable suspension of the leaf spring 1.

Cases occur in which it is desirable that the force F_{K}, see figure 3b, which will cause the collapse of the suspension means 3 is less than the force F_{D} which will be able to be transmitted between the leaf spring 1 and a vehicle in normal running. In such a case, it is necessary for the suspension means 3 to be adapted to collapse upon application of a minimal force F_{K} only if the force were to be applied in a certain prespecified direction 20, or within a prespecified range of direction, which direction 20 is substantially different than the principal force transmission direction 21 of the suspension means. By principal force transmission direction 21 is meant the direction in which the maximal forces F_{D} are transmitted during normal running. Usually, the maximal forces which are transmitted between the leaf spring 1 and the vehicle during normal running of a leaf-spring-suspended wheel are directed substantially vertically upward 21.

It is advantageous for the suspension means 3 to be adapted for suspension on a vehicle such that the interface between the first 12 and second component 17 has a principal extent in a plane 22 whose normal 23 has a component 24 directed horizontally rearward and a component 25 directed vertically downward in relation to the vehicle, see figure 3a. Preferably, said horizontal component 24 is directed substantially parallel with the extent of the vehicle 7 in the longitudinal direction.

The normal 23 can have a direction forming an angle α ranging from 0 to 60° in relation to a horizontal line 26 (which is parallel with the direction of travel 30 for the vehicle), and it preferably has a direction forming an angle α ranging from 20 to 45° in relation to the horizontal line 26. The suspension means 3 is preferably adapted to receive an axle journal 13 for force transmission between a vehicle 7 and a leaf spring 1. In the event of a load less than said prespecified load, the connecting member 18 is arranged to hold together the first 12 and second component 17 so as to detain the axle journal 13 between the first 12 and second 17 component. The first component 12 and/or the second component 17 can be provided with a recess 27 for receiving the axle journal 13.

Figure 3b illustrates, for the exemplification of the invention, forces F_{K}, F_{D} of an inventive suspension means 3 which is adapted to collapse upon application of a minimal force F_{K} in a direction 20 which is substantially different than the vertical direction 21. The size of the force F_{K} for which the suspension means 3 is adapted to collapse is less than the force F_{D} which the suspension means 3 is capable of transmitting from a leaf spring 1 to the vehicle 7 in said principal force transmission direction 21. The suspension means 3 is in this case adapted to collapse upon application of a force F_{K} in a direction substantially parallel, or almost parallel, with said normal 23 of the plane 22 between the first 12 and second 17 component upon application of a minimal force F_{K} chosen from within the range 10-40 kN. The arrangement is further adapted for suspension of a front wheel axle on a truck for transmission of a force F_{D}, from the rear end 5 of the leaf spring 1 to the vehicle 7, which force is of the order of magnitude 50 kN and is directed upward in the vertical direction 21.

The invention also relates to a leaf spring suspension device for a vehicle, comprising a leaf spring 1 for spring-mounted suspension of a vehicle wheel axle 11, a front mounting 8 and a rear mounting 9 for suspension of the leaf spring 1 on a vehicle, for example on a vehicle frame 7. The rear mounting 9 comprises a suspension means 3, which is provided with a built-in weakening 16 so as, in the event of a prespecified loading of the suspension means 3, and when the leaf spring 1 is connected to a vehicle 7 by means of the suspension means 3, to allow the suspension means 3 to collapse while the rear end 5 of the leaf spring 1 is moved rearward substantially past its, in normal running, rearmost position and/or is set free from the vehicle 7. The suspension means 3 of the inventive leaf spring device can here be configured in accordance with that which is described above for the suspension means 3.

It will be appreciated that the present invention is not limited to the embodiments which are described above and illustrated in the drawings; rather, the person skilled in the art will discover that many changes and modifications can be executed within the scope of protection of the appended patent claims. For example, the dimensions and the material of the components of the inventive arrangement can be varied in a number of ways. Although a device as described above, which is provided with a weakening in the form of a connecting member having relatively low strength and connecting a two-part component accommodating an axle journal, is advantageous, it should be emphasized that, in another embodiment of the arrangement, the weakening could be arranged in a different position and/or in a different component contained in the suspension device.

## Claims

1. An arrangement for suspending a leaf spring (1) on a vehicle (7), comprising a suspension means (3), which, at a first end (4), is connectable to a rear end (5) of the leaf spring (1) and, at a second end (6), is connectable to the vehicle (7) for suspension of the leaf spring (1) on the vehicle, **characterized in that** the suspension means (3) is provided with a built-in weakening (16) so as, in the event of a prespecified loading of the suspension means (3), and when the leaf spring (1) is connected to the vehicle (7) by means of the suspension means (3), to allow the suspension means (3) to collapse while the rear end (5) of the leaf spring (1) is moved rearward substantially past its, in normal running, rearmost position and/or is set free from the vehicle (7).

2. The arrangement as claimed in claim 1, **characterized in that** the suspension means (3) comprises a first component (12), which is connectable to the vehicle (7), a second component (17), which is connectable to the rear end (5) of the leaf spring (1), and a member (18), which is arranged to connect the first (12) and second (17) components, the connecting member (18) being arranged to collapse in the event of said prespecified load, so that the first and second components (12, 17) are separable from one another.

3. The arrangement as claimed in claim 2, **characterized in that** the connecting member (18) is a screw joint.

4. The arrangement as claimed in any of the preceding claims, **characterized in that** the suspension means (3) comprises a link arm (14) for rotatable suspension of the leaf spring (1).

5. The arrangement as claimed in claim 2 or 3, **characterized in that** the suspension means (3) is adapted for suspension on the vehicle (7) such that the interface between the first (12) and second (17) component has a principal extent in a plane (22) whose normal (23) has a component (24) directed horizontally rearward and a component (25) directed vertically downward in relation to the vehicle (7).

6. The arrangement as claimed in claim 5, **characterized in that** said horizontal component (24) is directed substantially parallel with the extent of the vehicle in the longitudinal direction.

7. The arrangement as claimed in claim 5 or 6, **characterized in that** said normal (23) has a direction such that it forms an angle (α) ranging from 0 to 60° in relation to a horizontal line (26).

8. The arrangement as claimed in claim 5 or 6, **characterized in that** said normal (23) has a direction such that it forms an angle (α) ranging from 20 to 45° in relation to a horizontal line (26).

9. The arrangement as claimed in any one of claims 2-8, **characterized in that** the suspension means (3) is adapted to receive an axle journal (13) for force transmission between the vehicle (7) and the leaf spring (1), the connecting member (18) being arranged to, in the event of a load less than said prespecified load, hold together the first (12) and second component (17) so as to detain the axle journal (13) between the first and second component (12, 17).

10. The arrangement as claimed in claim 9, **characterized in that** the first component (12) and/or the second component (17) is/are provided with a recess (27) for receiving the axle journal (13).

11. The arrangement as claimed in claims 4 and 9, **characterized in that** the link arm (14) is disposed between the axle journal (13) and the leaf spring (1).

12. The arrangement as claimed in any one of the preceding claims, **characterized in that** the suspension means (3) is adapted to collapse upon application of a minimal force (F_{K}) in a direction (20) which is substantially different than the principal force transmission direction (21) of the suspension means (3) from the leaf spring (1) to the vehicle (7).

13. The arrangement as claimed in claim 12, **characterized in that** the suspension means (3) is adapted to collapse upon application of a minimal force (F_{K}) in a direction (20) which is substantially different than the vertical direction (21).

14. The arrangement as claimed in either of claims 12 or 13, **characterized in that** the size of the force (F_{K}) for which the suspension means (3) is adapted to collapse is less than the force (F_{D}) which the suspension means (3) is capable of transmitting from the leaf spring (1) to the vehicle (7) in said principal force transmission direction (21).

15. The arrangement as claimed in any one of claims 5-8, **characterized in that** the suspension means (3) is adapted to collapse upon application of a force (F_{K}) in a direction substantially parallel, or almost parallel, with said normal (23).

16. The arrangement as claimed in any one of the preceding claims, **characterized in that** the suspension means (3) is adapted to collapse upon application of a minimal force (F_{K}) chosen from within the range 10-40 kN.

17. The arrangement as claimed in any one of the preceding claims, **characterized in that** the arrangement is adapted for suspension of a front wheel axle (11) on a truck.

18. A leaf spring suspension device for a vehicle, comprising a leaf spring (1) for spring-mounted suspension of a vehicle wheel axle (11), a front (8) and a rear (9) mounting (8 or 9) for suspension of the leaf spring (1) on the vehicle (7), **characterized in that** the rear mounting (8) comprises a suspension means (3), which is provided with a built-in weakening (16) so as, in the event of a prespecified loading of the suspension means (3), and when the leaf spring (1) is connected to the vehicle (7) by means of the suspension means (3), to allow the suspension means (3) to collapse while the rear end (5) of the leaf spring (1) is moved rearward substantially past its, in normal running, rearmost position and/or is set free from the vehicle (7).

19. A vehicle comprising an arrangement as claimed in any one of claims 1-17.

## Patentansprüche

1. Anordnung zum Aufhängen einer Blattfeder (1) an einem Fahrzeug (7) mit einer Aufhängeeinrichtung (3), die an einem ersten Ende (4) mit einem hinteren Ende (5) der Blattfeder (1) und an einem zweiten Ende (6) mit dem Fahrzeug (7) für eine Aufhängung der Blattfeder (1) an dem Fahrzeug verbindbar ist, **dadurch gekennzeichnet, dass** die Aufhängeeinrichtung (3) mit einer eingebauten Schwächung (16) versehen ist, so dass im Falle einer vorbestimmten Belastung der Aufhängeeinrichtung (3) und wenn die Blattfeder (1) mit dem Fahrzeug (7) mit Hilfe der Aufhängeeinrichtung (3) verbunden ist, ein Kollabieren der Aufhängeeinrichtung (3) zugelassen wird, während das hintere Ende (6) der Blattfeder (1) nach hinten an ihrer bei Normalfahrt hintersten Stellung wesentlich vorbei bewegt und/oder frei vom Fahrzeug (7) gesetzt wird.

2. Anordnung nach Anspruch 1, **dadurch gekennzeichnet, dass** die Aufhängeeinrichtung (3) eine erstes Bauteil (12), die mit dem Fahrzeug (7) verbindbar ist, ein zweites Bauteil (17), die mit dem hinteren Ende (5) der Blattfeder (1) verbindbar ist und ein Element (18) aufweist, das angeordnet ist, um das erste (12) und das zweite (17) Bauteil zu verbinden, wobei das Verbindungselement (18) für ein Kollabieren im Falle der vorbestimmten Belastung angeordnet ist, so dass das erste und zweite Bauteil (12.17) voneinander trennbar sind.

3. Anordnung nach Anspruch 2, **dadurch gekennzeichnet, dass** das Verbindungselement (18) eine Schraubverbindung ist.

4. Anordnung nach einem der vorhergehenden Ansprüche, **dadurch gekennzeichnet, dass** die Aufhängeeinrichtung (3) einen Verbindungsarm (14) für eine drehbare Aufhängung der Blattfeder (1) aufweist.

5. Anordnung nach Anspruch 2 oder 3, **dadurch gekennzeichnet, dass** die Aufhängeeinrichtung (3) für ein solches Aufhängen an dem Fahrzeug (7) angepasst ist, dass die Trennfläche zwischen dem ersten (12) und dem zweiten (17) Bauteil eine Haupterstreckung in einer Ebene (22) hat, deren Normale (23) eine horizontal nach hinten gerichtete Komponente und eine vertikal nach unten bezogen auf das Fahrzeug (7) gerichtete Komponente (25) hat.

6. Anordnung nach Anspruch 5, **dadurch gekennzeichnet, dass** die horizontale Komponente (24) im Wesentlichen parallel zu der Erstreckung des Fahrzeugs in der Längsrichtung gerichtet ist.

7. Anordnung nach Anspruch 5 oder 6, **dadurch gekennzeichnet, dass** die Normale (23) eine solche Richtung hat, dass sie einen Winkel (α) bildet, der bezogen auf eine horizontale Linie (26) von 0° bis 60° reicht.

8. Anordnung nach Anspruch 5 oder 6, **dadurch gekennzeichnet, dass** die Normale (23) eine solche Richtung hat, dass sie einen Winkel (α) bezogen auf eine horizontale Linie (26) bildet, der von 20 bis 45° reicht.

9. Anordnung nach einem der Ansprüche 2 bis 8, **dadurch gekennzeichnet, dass** die Aufhängeeinrichtung (3) für die Aufnahme eines Achsenlagers (13) für die Kraftübertragung zwischen dem Fahrzeug (7) und der Blattfeder (1) angepasst ist, wobei das Verbindungselement (18) angeordnet ist, um in dem Fall, in welchem eine Belastung kleiner als die vorbestimmte Belastung ist, das erste Bauteil (12) und das zweite Bauteil (17) so zusammen zu halten, dass das Achsenlager (13) zwischen dem ersten und dem zweiten Bauteil (12, 17) festgehalten ist.

10. Anordnung nach Anspruch 9, **dadurch gekennzeichnet, dass** das erste Bauteil (12) und/oder das zweite Bauteil (17) mit einer Aussparung (27) für die Aufnahme des Achsenlagers (13) versehen ist/sind.

11. Anordnung nach Anspruch 4 und 9, **dadurch gekennzeichnet, dass** der Verbindungsarm (14) zwischen dem Lagerhals (13) und der Blattfeder (1) angeordnet ist.

12. Anordnung nach einem der vorhergehenden Ansprüche, **dadurch gekennzeichnet, dass** die Aufhängeeinrichtung (3) für ein Kollabieren bei Anlegen einer Minimalkraft (F_{K}) in eine Richtung (20) angepasst ist, die wesentlich anders als die Hauptkraftübertragungsrichtung (21) der Aufhängeeinrichtung (7) von der Blattfeder (1) zum Fahrzeug (7) ist.

13. Anordnung nach Anspruch 12, **dadurch gekennzeichnet, dass** die Aufhängeeinrichtung (3) für ein Kollabieren bei Anlegen einer minimalen Kraft (F_{K}) in eine Richtung (20) angepasst ist, die wesentlich anders als die Vertikalrichtung (21) ist.

14. Anordnung nach Anspruch 12 oder 13, **dadurch gekennzeichnet, dass** die Größe der Kraft (F_{K}) für die die Aufhängeeinrichtung (3) für ein Kollabieren angepasst ist, kleiner ist als die Kraft (F_{D}), die die Aufhängeeinrichtung (3) von der Blattfeder (1) zum Fahrzeug (7) in der Hauptkraftübertragungsrichtung (21) übertragen kann.

15. Anordnung nach einem der Ansprüche 5 bis 8, **dadurch gekennzeichnet, dass** die Aufhängeeinrichtung (3) für ein Kollabieren bei Anlegen einer Kraft (F_{K}) in eine Richtung angepasst ist, die im Wesentlichen parallel oder fast parallel zu der erwähnten Normalen (23) ist.

16. Anordnung nach einem der vorhergehenden Ansprüche, **dadurch gekennzeichnet, dass** die Aufhängeeinrichtung (3) für ein Kollabieren bei Anlegen einer minimalen Kraft (F_{K}) angepasst ist, die innerhalb des Bereichs von 10 bis kN gewählt wird.

17. Anordnung nach einem der vorhergehenden Ansprüche, **dadurch gekennzeichnet, dass** die Anordnung für die Aufhängung einer Vorderradachse (11) eines Lastkraftwagens angepasst ist.

18. Blattfederaufhängungsvorrichtung für ein Fahrzeug mit einer Blattfeder (1) für eine federgehaltene Aufhängung einer Fahrzeugradachse (11) und mit einer vorderen und hinteren Halterung (8, 9) für die Aufhängung der Blattfeder (1) an dem Fahrzeug (7), **dadurch gekennzeichnet, dass** die hintere Haltung (8) eine Aufhängeeinrichtung (3) aufweist, die mit einer eingebauten Schwächung (16) versehen ist, so dass im Falle einer vorbestimmten Belastung der Aufhängeeinrichtung (3) und wenn die Blattfeder (1) mit dem Fahrzeug (7) mit Hilfe der Aufhängeeinrichtung (3) verbunden ist, ein Kollabieren der Aufhängeeinrichtung (3) zugelassen ist, während das hintere Ende (5) der Blattfeder (1) nach hinten an ihrer in normaler Fahrrichtung hintersten Position wesentlich vorbei bewegt und/oder von dem Fahrzeug (7) freigesetzt wird.

19. Fahrzeug mit einer Anordnung nach einem der Ansprüche 1 bis 17.

## Revendications

1. Agencement pour suspendre un ressort à lames (1) sur un véhicule (7), comportant des moyens de suspension (3) qui, à une première extrémité (4), peuvent être reliés à une extrémité arrière (5) du ressort à lames (1) et, à une seconde extrémité (6), peuvent être reliés au véhicule (7), pour une suspension du ressort à lames (1) sur le véhicule, **caractérisé en ce que** les moyens de suspension (3) sont munis d'un affaiblissement intégré (16) de manière à, dans l'éventualité d'un chargement pré-spécifié des moyens de suspension (3), et lorsque le ressort à lames (1) est relié au véhicule (7) par l'intermédiaire des moyens de suspension (3), permettre aux moyens de suspension (3) de s'infléchir alors que l'extrémité arrière (5) du ressort à lames (1) est déplacée vers l'arrière nettement au-delà de sa position la plus en arrière, en fonctionnement normal et/ou est libérée du véhicule (7).

2. Agencement comme revendiqué dans la revendication 1, **caractérisé en ce que** les moyens de suspension (3) comportent un premier composant (12), qui peut être relié au véhicule (7), un second composant (17), qui peut être relié à l'extrémité arrière (5) du ressort à lames (1), et un élément (18) qui est conçu pour relier les premier (12) et second (17) composants, l'élément de liaison (18) étant conçu pour s'infléchir dans l'éventualité de ladite charge pré-spécifiée, de telle sorte que les premier et second composants (12, 17) peuvent être séparés l'un de l'autre.

3. Agencement comme revendiqué dans la revendication 2, **caractérisé en ce que** l'élément de liaison (18) est un raccord à vis.

4. Agencement comme revendiqué dans l'une quelconque des revendications précédentes, **caractérisé en ce que** les moyens de suspension (3) comportent un bras de liaison (14) pour une suspension rotative du ressort à lames (1).

5. Agencement comme revendiqué dans la revendication 2 ou 3, **caractérisé en ce que** les moyens de suspension (3) sont adaptés pour une suspension sur le véhicule (7) de telle sorte que l'interface entre les premier (12) et second (17) composants a une étendue principale dans un plan (22) dont la normale (23) a une composante (24) dirigée horizontalement vers l'arrière et une composante (25) dirigée verticalement vers le bas par rapport au véhicule (7).

6. Agencement comme revendiqué dans la revendication 5, **caractérisé en ce que** ladite composante horizontale (24) est dirigée sensiblement parallèle à l'étendue du véhicule dans la direction longitudinale.

7. Agencement comme revendiqué dans la revendication 5 ou 6, **caractérisé en ce que** ladite normale (23) a une direction de telle sorte qu'elle forme un angle (α) variant de 0 à 60° par rapport à une ligne horizontale (26).

8. Agencement comme revendiqué dans la revendication 5 ou 6, **caractérisé en ce que** ladite normale (23) a une direction de telle sorte qu'elle forme un angle (α) variant de 20 à 45° par rapport à une ligne horizontale (26).

9. Agencement comme revendiqué dans l'une quelconque des revendications 2 à 8, **caractérisé en ce que** les moyens de suspension (3) sont adaptés pour recevoir un tourillon d'essieu (13) pour une transmission de force entre le véhicule (7) et le ressort à lames (1), l'élément de liaison (18) étant agencé pour, dans l'éventualité d'une charge inférieure à ladite charge pré-spécifiée, maintenir ensemble les premier (12) et second (17) composants de manière à garder le tourillon d'essieu (13) entre les premier et second composants (12, 17).

10. Agencement comme revendiqué dans la revendication 9, **caractérisé en ce que** le premier composant (12) et/ou le second composant (17) est/sont muni(s) d'un évidement (27) pour recevoir le tourillon d'essieu (13).

11. Agencement comme revendiqué dans les revendications 4 et 9, **caractérisé en ce que** le bras de liaison (14) est disposé entre le tourillon d'essieu (13) et le ressort à lames (1).

12. Agencement comme revendiqué dans l'une quelconque des revendications précédentes, **caractérisé en ce que** les moyens de suspension (3) sont adaptés pour s'infléchir lors de l'application d'une force minimale (F_{K}) dans une direction (20) qui est sensiblement différente de la direction principale de transmission de force (21) des moyens de suspension (3), du ressort à lames (1) au véhicule (7).

13. Agencement comme revendiqué dans la revendication 12, **caractérisé en ce que** les moyens de suspension (3) sont adaptés pour s'infléchir lors de l'application d'une force minimale (F_{K}) dans une direction (20) qui est sensiblement différente de la direction verticale (21).

14. Agencement comme revendiqué dans l'une des deux revendications 12 ou 13, **caractérisé en ce que** la taille de la force (F_{K}) pour laquelle les moyens de suspension (3) sont adaptés pour s'infléchir est inférieure à la force (F_{D}) que les moyens de suspension (3) sont capables de transmettre du ressort à lames (1) au véhicule (7) dans ladite direction principale de transmission de force (21).

15. Agencement comme revendiqué dans l'une quelconque des revendications 5 à 8, **caractérisé en ce que** les moyens de suspension (3) sont adaptés pour s'infléchir lors de l'application d'une force (F_{K}) dans une direction sensiblement parallèle, ou pratiquement parallèle, à ladite normale (23).

16. Agencement comme revendiqué dans l'une quelconque des revendications précédentes, **caractérisé en ce que** les moyens de suspension (3) sont adaptés pour s'infléchir lors de l'application d'une force minimale (F_{K}) choisie dans la plage de 10 à 40 kN.

17. Agencement comme revendiqué dans l'une quelconque des revendications précédentes, **caractérisé en ce que** l'agencement est adapté pour une suspension d'un essieu de roue avant (11) sur un camion.

18. Dispositif de suspension à ressort à lames pour un véhicule, comportant un ressort à lames (1) pour une suspension montée sur ressort d'un essieu de roue de véhicule (11), un support avant (8) et un support arrière (9) (8 ou 9) pour une suspension du ressort à lames (1) sur le véhicule (7), **caractérisé en ce que** le support arrière (8) comporte des moyens de suspension (3) qui sont munis d'un affaiblissement intégré (16) de manière à, dans l'éventualité d'un chargement pré-spécifié des moyens de suspension (3) et lorsque le ressort à lames (1) est relié au véhicule (7) par l'intermédiaire des moyens de suspension (3), permettre aux moyens de suspension (3) de s'infléchir alors que l'extrémité arrière (5) du ressort à lames (1) est déplacée vers l'arrière nettement au-delà de sa position la plus en arrière, en fonctionnement normal et/ou est libérée du véhicule (7).

19. Véhicule comportant un agencement comme revendiqué dans l'une quelconque des revendications 1 à 17.
